# EUROPEAN PATENT SPECIFICATION

(11) **EP 4 029 620 B1**
(45) Date of publication and mention of the grant of the patent: **29.05.2024**
(21) Application number: 20862735.6
(22) Date of filing: 31.08.2020
(51) Int. Cl.: B21D 5/00, B21D 37/00, G05B 19/4061, B21D 5/02

(54) **PRESS BRAKE DIE MIS-INSTALLATION DETECTING DEVICE, AND DIE MIS-INSTALLATION DETECTING METHOD**
VORRICHTUNG ZUR ERKENNUNG DER FEHLMONTAGE EINES GESENKS EINER ABKANTPRESSE UND VERFAHREN ZUR ERKENNUNG DER FEHLMONTAGE EINES GESENKS EINER ABKANTPRESSE
DISPOSITIF DE DÉTECTION DE MAUVAISE INSTALLATION DE MATRICE DE PRESSE PLIEUSE, ET PROCÉDÉ DE DÉTECTION DE DE MAUVAISE INSTALLATION DE MATRICE

(30) Priority: 12.09.2019 JP 2019166132
(43) Date of publication of application: 20.07.2022
(73) Proprietor: Amada Co., Ltd., Isehara-shi, Kanagawa 259-1196 (JP)
(72) Inventor: SENBA, Akira, Isehara-shi, Kanagawa 259-1196 (JP)
(74) Representative: Grünecker Patent- und Rechtsanwälte PartG mbB
(86) International application number: PCT/JP2020/032864
(87) International publication number: WO 2021/049349

(56) References cited:
- JP-A- 2007 061 879
- JP-A- 2014 024 118
- US-A1- 2001 016 805
- US-A1- 2004 157 715

## Description

### Technical Field

The present disclosure relates to a tool improper installation detection device and a tool improper installation detection method of a press brake.

### Background Art

In a press brake, a punch is installed in a punch holder provided on an upper table, and a die is installed in a die holder provided on a lower table. In the press brake, the upper table is lowered toward the lower table to bend a sheet metal between the punch and the die. Instead of installation of the tool (punch or die) in the tool holder (punch holder or die holder) by an operator, an automatic tool changer referred to as the ATC may install, in the tool holder, the tool that is necessary to bend the sheet metal (see Patent Literature 1 or 2).

US 2004/157715 A1 relates to a bending press and tool mounting. In particular, coordinates of stations s1, s2 and s3 are determined so that the tools and works on each station do not interfere with each other. For tool mounting, tools are A, B are selected that have lengths necessary for bending, and are displayed simultaneously to make judgement whether the work and the neighboring tool B interfere.

US 2001/016805 A1 relates to setup planning for sheet metal bending operations. Setup constraints are defined based on the lengths of tooling stages and on distances between a present stage and an adjacent stage.

### Citation List

### Patent Literature

Patent Literature 1: Japanese Patent Application Laid-Open Publication No. 2013-173172
Patent Literature 2: Japanese Patent Application Laid-Open Publication No. 2014-24118

### Summary

In a state in which a tool is installed in a tool holder by the ATC to produce a predetermined part, an operator may additionally attach, to the tool holder, another tool to be used for bending the same part or another tool to be used for bending another part. At this time, if the operator attaches the additional tool at a position of the tool holder at which the additional tool should not be installed and then executes bending of the part, the part or the additional tool may be damaged.

The purpose of one or more embodiments is to provide a tool improper installation detection device and a tool improper installation detection method of a press brake capable of detecting improper installation of an additional tool that is attached to a tool holder by an operator.

The scope of the invention is defined in the independent claims.

According to the tool improper installation detection device and the tool improper installation detection method of a press brake of the one or more embodiments, improper installation of an additional tool that is attached to a tool holder by an operator can be detected.

### Brief Description of Drawings

[Figure 1]

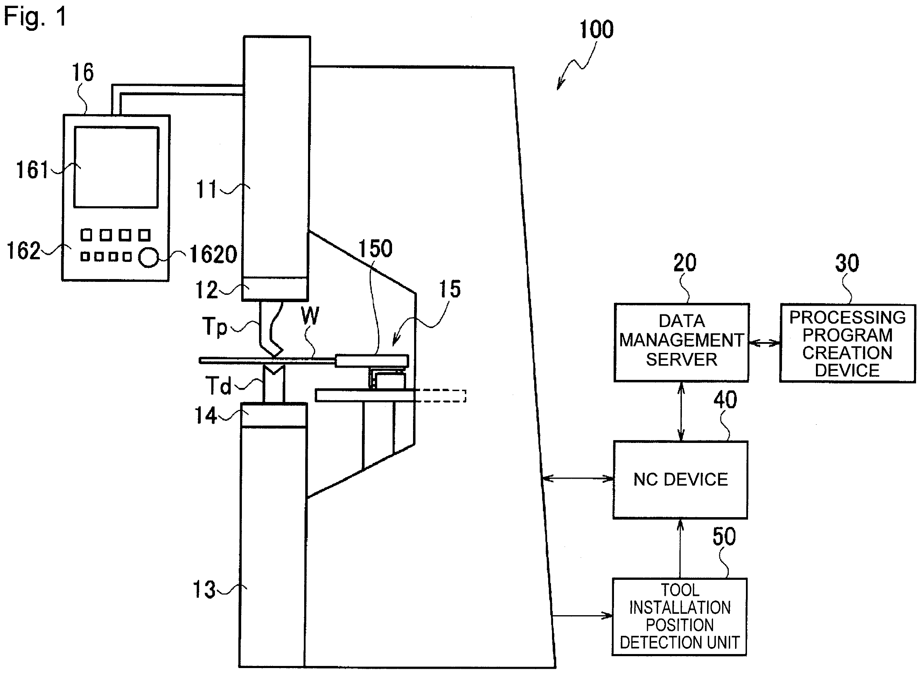

   Figure 1 is a diagram showing a configuration example of a press brake 100 provided with a tool improper installation detection device of one or more embodiments.
[Figure 2]

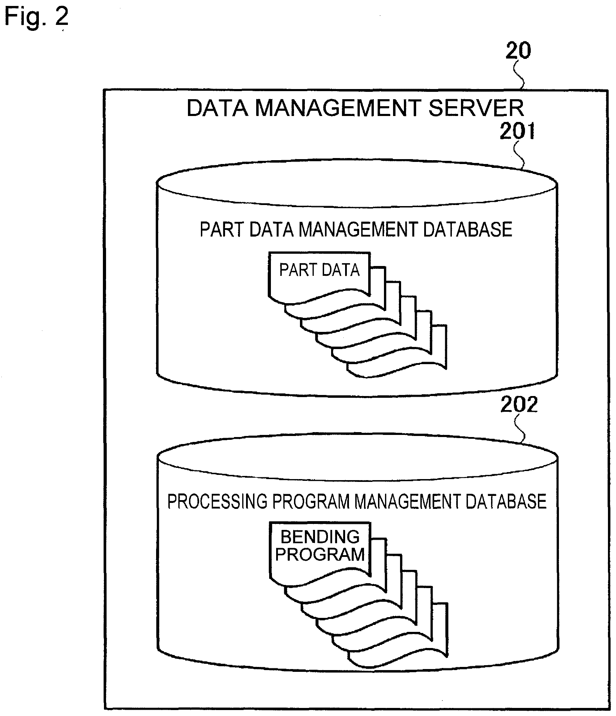

   Figure 2 is a block diagram showing a configuration example of a data management server 20 shown in Figure 1.
[Figure 3]

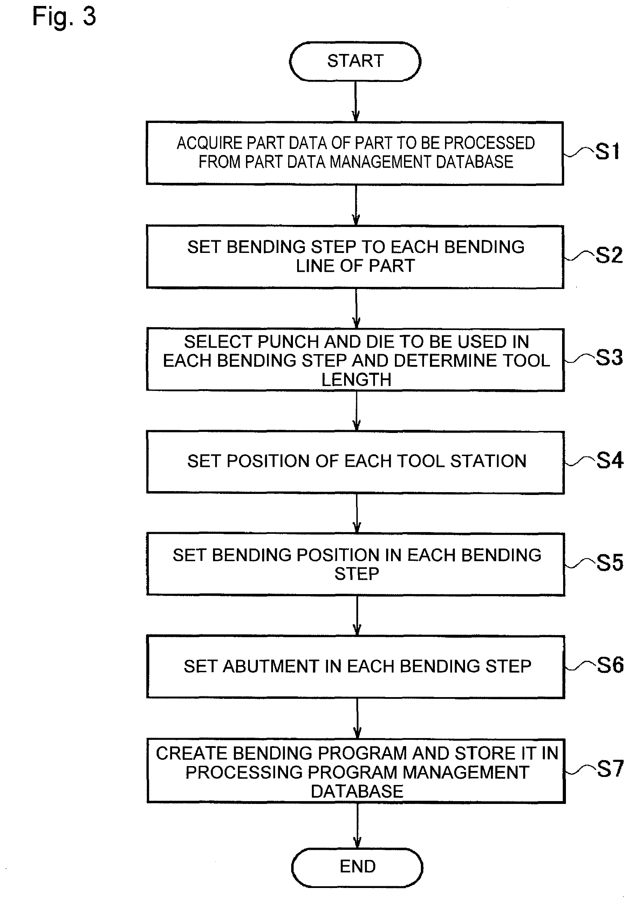

   Figure 3 is a flowchart showing processing of creating a processing program to be executed by a processing program creation device 30 shown in Figure 1.
[Figure 4]

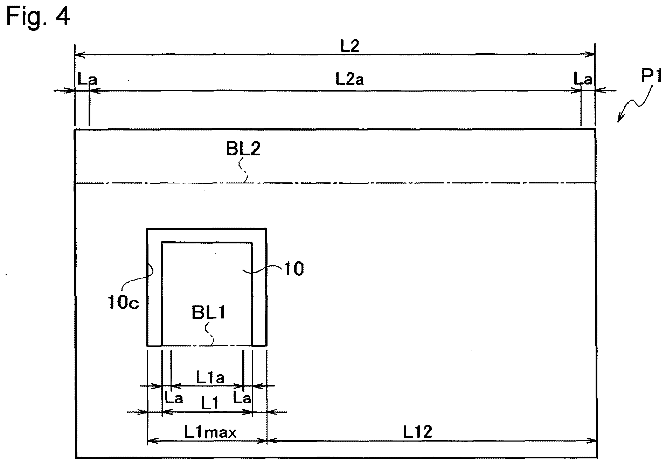

   Figure 4 is a plan view showing a part P1 that is an example of a part to be bent by the press brake 100.
[Figure 5]

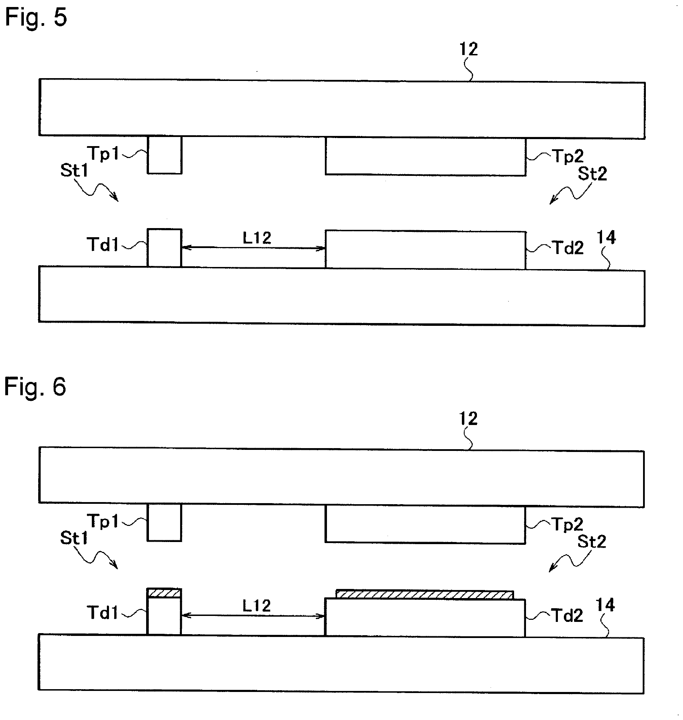

   Figure 5 is a plan view showing two tool stations used in bending steps of two bending lines BL1 and BL2 of the part P1 shown in Figure 4.
[Figure 6]
   Figure 6 is a plan view showing bending positions of the part P1 in the two bending steps.
[Figure 7]

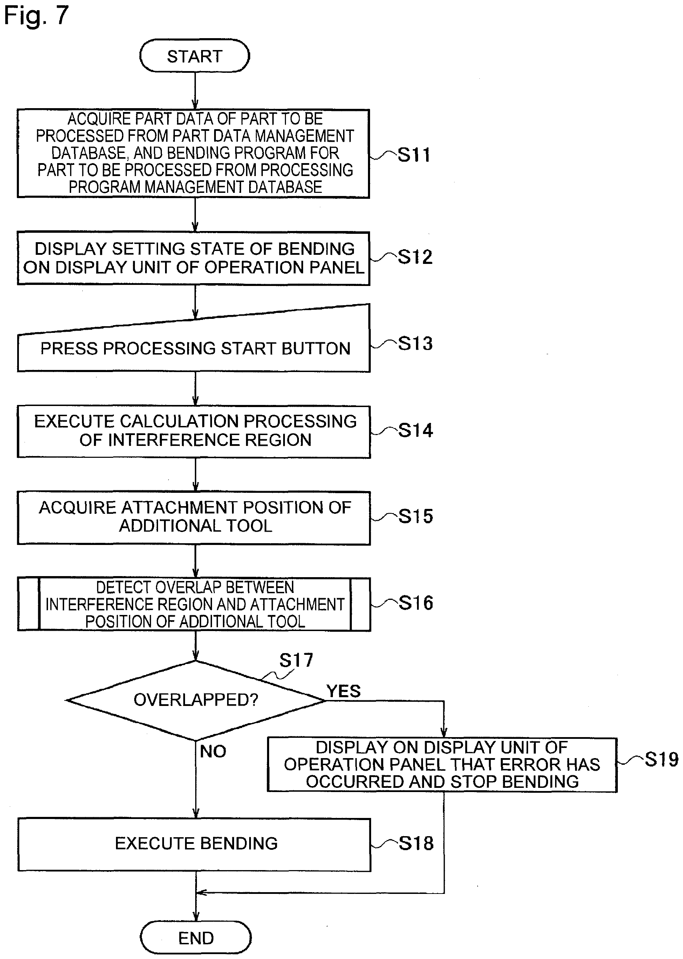

   Figure 7 is a flowchart showing processing of bending of a part to be executed by an NC device 40 shown in Figure 1, including a tool improper installation detection method of the one or more embodiments.
[Figure 8]

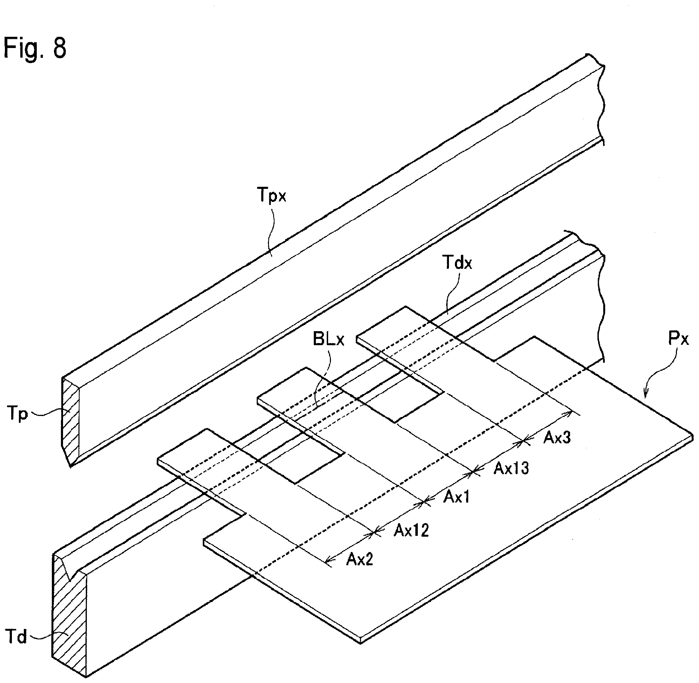

   Figure 8 is a perspective view showing a basic model of calculation processing of an interference region.
[Figure 9]

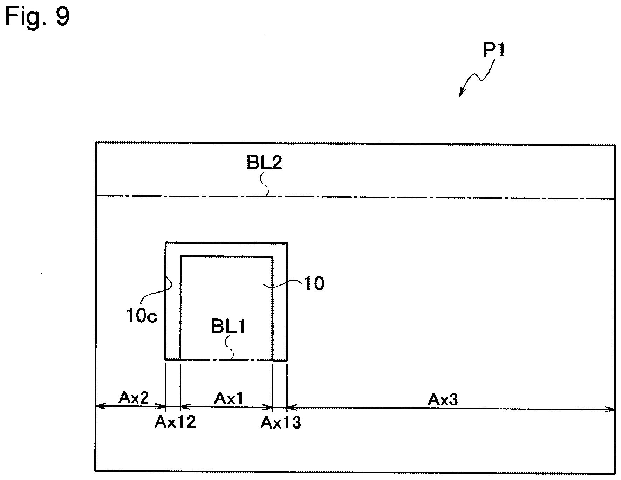

   Figure 9 is a plan view showing a calculation result of the interference region when the part P1 is bent along the bending line BL1.
[Figure 10]

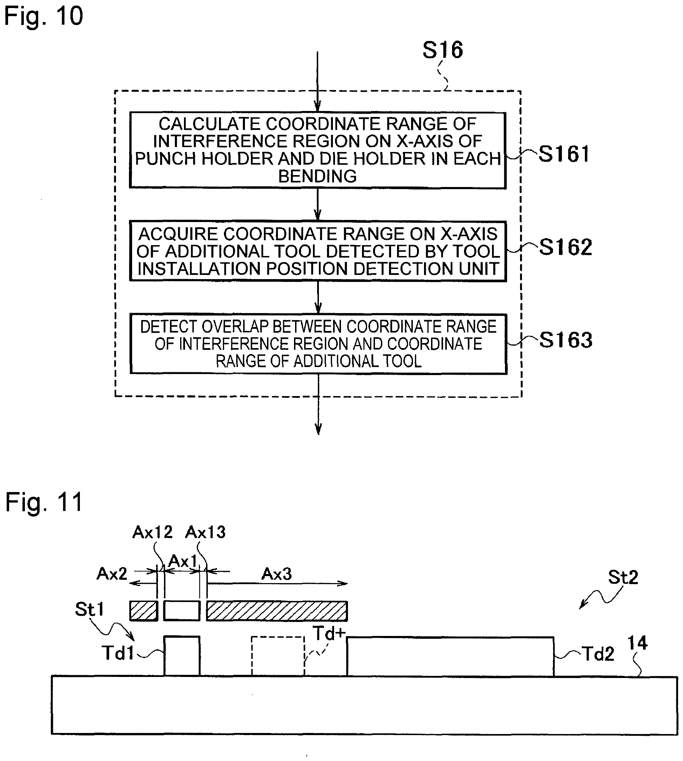

   Figure 10 is a flowchart showing detailed processing of step S16 shown in Figure 7.
[Figure 11]
   Figure 11 is a diagram showing a state in which the interference region obtained in Figure 9 is reflected on an axis in a longitudinal direction of a tool holder, in correspondence to an attachment position of a tool with respect to the tool holder when the part P1 is bent along the bending line BL1.
[Figure 12]

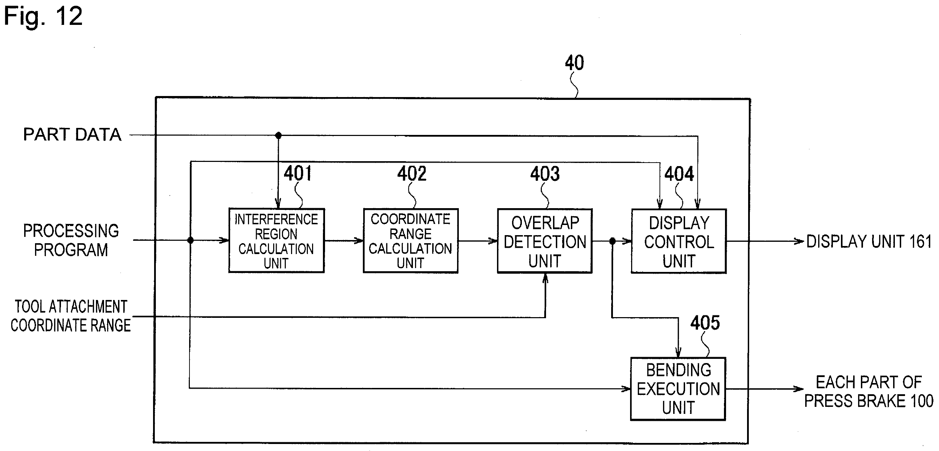

   Figure 12 is a block diagram showing an internal configuration example of the NC device 40 that realizes the tool improper installation detection device of the one or more embodiments.

### Description of Embodiments

Hereinafter, a tool improper installation detection device and a tool improper installation detection method of a press brake of one or more embodiments will be described with reference to the attached drawings. In Figure 1, a press brake 100 is provided with an upper table 11 that can move up and down and a lower table 13 whose position is fixed. A punch holder 12 to which a punch Tp is attached is provided at the lower end of the upper table 11. A die holder 14 to which a die Td is attached is provided at the upper end of the lower table 13. The punch Tp and the die Td may be each referred to as a tool, and the punch holder 12 and the die holder 14 may be each referred to as a tool holder.

A sheet metal W to be bent to produce a predetermined product is placed on the die Td. An unillustrated operator may grab the sheet metal W and place the sheet metal W on the die Td, or an unillustrated robot may grab the sheet metal W and place the sheet metal W on the die Td. The press brake 100 is provided with a back gauge 15 for positioning the sheet metal W. The back gauge 15 includes a pair of abutments 150. The abutments 150 are configured to move according to a position of the sheet metal W in a vertical direction and a position at which the sheet metal W is bent. The end portion on the inner part of the sheet metal W is abutted against the abutment 150 so that the sheet metal W is positioned.

The press brake 100 is provided with an operation panel 16. The operation panel 16 includes a display unit 161 for displaying various information and an operation unit 162 including a plurality of operation buttons. The operation unit 162 includes a processing start button 1620 that is pressed when bending is started.

An NC device 40 controls the overall operation of the press brake 100. Specifically, the NC device 40 controls raising and lowering of the upper table 11, and controls the back gauge 15. The NC device 40 is an example of a control device for controlling the press brake 100.

The press brake 100 is provided with a tool installation position detection unit 50. The NC device 40 and the tool installation position detection unit 50 are provided as configurations of the press brake 100. The tool installation position detection unit 50 may be provided outside the NC device 40, or may be provided inside the NC device 40. The configuration provided outside the NC device 40 and the NC device 40 may constitute the tool installation position detection unit 50. As an example, the configuration described in Patent Literature 2 can be adopted as the tool installation position detection unit 50.

The NC device 40 is connected to a data management server 20. A processing program creation device 30 is also connected to the data management server 20. The NC device 40 and the processing program creation device 30 may be connected to the data management server 20 via a network. The processing program creation device 30 is composed of a computer device that functions as computer aided manufacturing (CAM).

As shown in Figure 2, the data management server 20 is provided with a part data management database 201 and a processing program management database 202. A plurality pieces of part data are stored in the part data management database 201. A plurality of processing programs created by the processing program creation device 30 are stored in the processing program management database 202.

Processing in which the processing program creation device 30 creates the processing program will be described with reference to a flowchart shown in Figure 3. In step S1 of Figure 3, the processing program creation device 30 reads out and acquires the part data of a part to be processed from the part data management database 201. As an example, it is assumed that the processing program creation device 30 has acquired the part data of a part P1 shown in Figure 4. A cutout 10c is formed in the part P1, and a portion surrounded by the cutout 10c is a cut and raised piece 10.

In step S2, the processing program creation device 30 sets a bending step to each bending line of the part. In the part P1 shown in Figure 4, the processing program creation device 30 sets a bending line BL1, which is set at the base of the cut and raised piece 10, as an initially performed first bending step, and sets a bending line BL2 as a secondly performed second bending step. The bending lines of the part are set in the part data.

In step S3, the processing program creation device 30 selects the punch Tp and the die Td to be used in each bending step, and determines a tool length. The processing program creation device 30 selects the punch Tp and the die Td to be used in each bending step from tools managed by an unillustrated tool management database.

In Figure 4, the length of the bending line BL1 is L1, and the length of the bending line BL2 is L2. The bending line BL1 can be bent even if the tool has a length that is shorter by an allowable length La at each of both ends of the bending line BL1 that is L1. Therefore, the shortest tool length that allows the bending line BL1 to be bent is a length L1a. In bending the bending line BL1, the tool can be lengthened up to the cutout 10c. Therefore, the longest tool length that allows the bending line BL1 to be bent is L1max.

In the same manner, the bending line BL2.can be bent even if the tool has a length that is shorter by an allowable length La at each of both ends of the bending line BL2 that is L2. Therefore, the shortest tool length that allows the bending line BL2 to be bent is a length L2a. The allowable length La for the bending line BL1 and the allowable length La for the bending line BL2 are not the same. In bending the bending line BL2, the tool length can be extended to the left and right without limitation. The processing program creation device 30 selects the punch Tp and the die Td that are tools managed by the tool management database, each of which has a length equal to or longer than the shortest tool length and equal to or shorter than the longest tool length when the longest tool length is set.

Returning to Figure 3, in step S4, the processing program creation device 30 sets a position of each tool station. The position of the tool station is a position on the axis in the left-right direction on which the punch Tp is attached to the punch holder 12 and the die Td is attached to the die holder 14. The axis in the left-right direction, which is the longitudinal direction of the punch holder 12 and the die holder 14, is defined as the x-axis. As an example, as shown in Figure 5, the processing program creation device 30 sets a punch Tp1 and a die Td1 to be used in the first bending step to a tool station St1, and sets a punch Tp2 and a die Td2 to be used in the second bending step to a tool station St2.

At this time, the tool station St2 needs to be set at a position at which the punch Tp2 and the die Td2 do not interfere with the part P1 when the part P1 is bent in the first bending step. When the length from the end portion of the cutout 10c to the end portion of the part P1 shown in Figure 4 is defined as L12, the tool station St1 and the tool station St2 need to be separated by at least the length L12. The processing program creation device 30 can obtain the length L12 by calculation processing of an interference region that will be described later.

In step S5, the processing program creation device 30 sets a bending position in each bending step. Specifically, as shown in Figure 6, the processing program creation device 30 sets the positions at which the bending line BL1 and the line BL2 are bent with respect to the lengths of the die Td1 and the die Td2 in the left-right direction, respectively. Typically, the bending positions are set such that the center of each length of the bending line BL1 and the line BL2 coincides with the center of each length of the die Td1 and the die Td2.

In step S6, the processing program creation device 30 sets a position of the pair of abutments 150 when the part is bent in each bending step.

In step S7, the processing program creation device 30 creates a bending program for bending the part based on each information set in steps S2 to S6, stores the bending program in the processing program management database 202, and ends the processing.

Next, processing in which the NC device 40 bends the part will be described with reference to a flowchart shown in Figure 7. In step S11 of Figure 7, the NC device 40 acquires the part data of the part to be processed from the part data management database 201, and the bending program for the part to be processed from the processing program management database 202. It is assumed that the NC device 40 has acquired the part data of the part P1 shown in Figure 4 and the bending program for the part P1.

In step S12, the NC device 40 displays a setting state of the bending on the display unit 161 of the operation panel 16. Specifically, the NC device 40 displays, as the setting state, an image showing the positions of the tool stations St1 and St2 with respect to the punch holder 12 and the die holder 14 and the bending position of the part P1 in each bending step in the same manner as Figure 6.

In step S13, the operator presses the processing start button 1620. When the processing start button 1620 is pressed, the upper table 11 is brought into a state in which the upper table 11 can be lowered by an operation of an unillustrated foot button. However, in the one or more embodiments, the presence or absence of improper installation of the tool is detected by the processing of step S14 and thereafter, and if the improper installation of the tool is not detected, the operator can operate the foot button to lower the upper table 11. If the improper installation of the tool is detected, the state in which the upper table 11 can be lowered is released.

When the operator presses the processing start button 1620, the NC device 40 executes the calculation processing of the interference region in step S14.

With reference to Figure 8, a basic model of the calculation processing of the interference region will be described. A case is considered in which a part Px of the basic model shown in Figure 8 is bent along a bending line BLx of a bending region Ax1. It is assumed that the part Px is virtually bent at the position of the bending line BLx using a punch Tpx and a die Tdx that are tool models each having an infinite length. At this time, since regions Ax2 and Ax3 interfere with the punch Tpx and the die Tdx, the regions Ax2 and Ax3 are interference regions Ax2 and Ax3. Between the bending region Ax1 and the interference region Ax2 is a non-interference region Ax12 and between the bending region Ax1 and the interference region Ax3 is a non-interference region Ax13. The tool models each having an infinite length are used here, but in the calculation processing of the interference region, it is sufficient to consider bending the part using a tool having a length exceeding the size of the part.

As shown in Figure 9, when the calculation processing of the interference region at the time of bending the part P1 along the bending line BL1 is executed, the range of the bending line BL1 is the bending region Ax1, the region on the left side of the cutout 10c is the interference region Ax2, and the region on the right side of 10c is the interference region Ax3. The width portions of the cutout 10c on the left and right sides of the cut and raised piece 10 are the non-interference regions Ax12 and Ax13. The width of the interference region Ax3 corresponds to the distance L12.

In step S15, the NC device 40 acquires an attachment position of the tool detected by the tool installation position detection unit 50. The NC device 40 acquires an attachment position of the additional tool manually added by the operator other than the tool installed by the ATC in the punch holder 12 or the die holder 14. In step S16, the NC device 40 detects an overlap between the interference region and the attachment position of the additional tool.

Figure 10 shows the detailed processing of step S16. In step S161, the NC device 40 calculates a coordinate range (a first coordinate range) of the interference region on the x-axis of the punch holder 12 and the die holder 14 in each bending step.

Figure 11 shows a state in which the interference region obtained in Figure 9 is reflected on the x-axis in correspondence to the attachment position of the die Td1 with respect to the die holder 14 when the part P1 is bent along the bending line BL1. Specifically, the NC device 40 arranges the bending region Ax1 such that the center of the bending region Ax1 coincides with the center of the length of the die Td1, and arranges the non-interference regions Ax12 and Ax13 on the left and right side of the bending region Ax1. The NC device 40 sets the interference region Ax2 on the left side of the left end of the non-interference region Ax12, and sets the interference region Ax3 for the right end of the non-interference region Ax13. In Figure 11, for the sake of simplicity, the punch holder 12 and the punches Tp1 and Tp2 are not illustrated.

For example, the left end portions of the punch holder 12 and the die holder 14 have a coordinate value of 0. The range from a coordinate value at the left end portion to a coordinate value at the right end portion of the interference region Ax2 and the range from a coordinate value at the left end portion to a coordinate value at the right end portion of the interference region Ax3 are the coordinate range of the interference region on the x-axis.

In step S162, the NC device 40 acquires a coordinate range (a second coordinate range) on the x-axis of the additional tool detected by the tool installation position detection unit 50. The range from a coordinate value at the left end portion to a coordinate value at the right end portion of the additional tool is the coordinate range of the additional tool.

In step S163, the NC device 40 detects an overlap between the coordinate range of the interference region and the coordinate range of the additional tool. For example, if a die Td+, which is an additional tool, is attached at a position shown by the broken line in Figure 11, the coordinate range of the interference region overlaps with the coordinate range of the additional tool. If the coordinate range of the interference region overlaps with the coordinate range of the additional tool, the NC device 40 determines that the additional tool is an improperly installed tool.

Returning to Figure 7, in step S17, the NC device 40 determines whether or not the coordinate range of the interference region overlaps with the range of the coordinate values of the additional tool. If there is no overlap (NO), the NC device 40 executes bending of the parts in step S18, and ends the processing. If there is an overlap (YES), the NC device 40 displays, in step S19, that an error has occurred on the display unit 161 of the operation panel 16, stops bending of the part, and ends the processing.

The NC device 40 may stop bending of the part and end the processing without displaying on the display unit 161 that an error has occurred. It is preferable that the NC device 40 displays on the display unit 161 that an error has occurred. The NC device 40 may generate a sound to notify the operator that an error has occurred.

Figure 12 shows a configuration example of the NC device 40 that realizes the processing shown in Figure 7. In Figure 12, an interference region calculation unit 401 executes calculation processing for obtaining, when the plurality of bending lines set for the part are sequentially bent using the predetermined tool based on the part data and the processing program, the interference region in which the part interferes with the tool when the tool length of the tool to be used for each bending line is virtually extended. A coordinate range calculation unit 402 calculates, based on the interference region, the first coordinate range on the x-axis in which the tool is not allowed to be attached to the tool holder.

The tool installation position detection unit 50 detects the second coordinate range on the x-axis in which the additional tool is attached to the tool holder. An overlap detection unit 403 acquires the second coordinate range. The overlap detection unit 403 detects whether or not the interference region interferes with the additional tool attached to the tool holder, and determines that the additional tool is an improperly installed tool when it is detected that the interference region interferes with the additional tool. Specifically, the overlap detection unit 403 detects whether or not the first coordinate range overlaps with the second coordinate range, and determines that the additional tool is an improperly installed tool when it is detected that the first coordinate range overlaps with the second coordinate range.

It is preferable that the NC device 40 is provided with a display control unit 404 for controlling the display unit 161 to display that an error has occurred when the overlap detection unit 403 determines that the additional tool is an improperly installed tool. It is preferable that the overlap detection unit 403 controls a bending execution unit 405 to stop bending of the part when the overlap detection unit 403 determines that the additional tool is an improperly installed tool after start of processing of the part is instructed. The bending execution unit 405 controls each part of the press brake 100 such that bending of the part is executed based on the processing program unless the overlap detection unit 403 determines that the additional tool is an improperly installed tool.

The present invention is not limited to the one or more embodiments described above, and various modifications can be made without departing from the summary of the present invention.

## Claims

1. A tool improper installation detection device of a press brake (100), comprising:
an interference region calculation unit (401) configured to obtain, when a plurality of bending lines set for a part (P1) are sequentially bent using predetermined tools, a cutout (10c) being formed in the part (P1) and a portion surrounded by the cutout (10c) being a cut and raised piece (10), a width of the cut and raised piece (10) being a bending region (Ax1), and width portions of the cutout (10c) on a left and a right sides of the cut and raised piece (10) being non-interference regions (Ax12, Ax13),
an interference region in which the part (P1) interferes with the tool when each tool length of each tool set in a processing program used to bend each bending line is virtually extended, based on each position of each tool in a left-right direction on which each tool is attached to a tool holder set in each tool station set in the processing program, thereby obtaining interference regions (Ax2, Ax3) on the left and right sides of the cut and raised piece (10);
a coordinate range calculation unit (402) configured to arrange the bending region (Ax1) such that a center of the bending region (Ax1) coincides with a center of the tools for bending the bending region (Ax1), to arrange the non-interference regions (Ax12, Ax13) on the left and right sides of the bending region (Ax1), to set the interference regions (Ax2, Ax3) on the left and right sides of the non-interference regions (Ax12, Ax13), and to calculate a range from a coordinate value at the left end portion to a coordinate value at the right end portion of the interference region (Ax2) on the left side and a range from a coordinate value at the left end portion to a coordinate value at the right end portion of the interference region (Ax3) on the right side as a first coordinate range in which a tool is not allowed to be attached to the tool holder;
a tool installation position detection unit (50) configured to detect a second coordinate range in which an additional tool is attached to the tool holder, the additional tool being manually added by an operator other than a tool being previously set in the processing program used to bend each bending line or installed by an automatic tool changer, and the second coordinate range being a range from a coordinate value at a left end portion to a coordinate value at a right end portion of the additional tool in the left-right direction of the tool holder; and
an overlap detection unit (403) configured to detect whether or not the first coordinate range interferes with the second coordinate range, and to determine that the additional tool is an improperly installed tool when it is detected that the first coordinate range interferes with the second coordinate range.

2. The tool improper installation detection device of a press brake (100) according to claim 1, further comprising a display control unit (404) configured to control a display unit (161) to display that an error has occurred when the overlap detection unit (403) determines that the additional tool is an improperly installed tool.

3. The tool improper installation detection device of a press brake (100) according to claim 1 or 2, wherein the overlap detection unit (403) controls a bending execution unit (405) to stop bending of the part (P1) when the additional tool is determined to be an improperly installed tool.

4. A tool improper installation detection method of a press brake (100), comprising:
obtaining, by a control device (40) for controlling the press brake (100), when a plurality of bending lines set for a part (P1) are sequentially bent using predetermined tools, a cutout (10c) being formed in the part (P1) and a portion surrounded by the cutout (10c) being a cut and raised piece (10), a width of the cut and raised piece (10) being a bending region (Ax1), and width portions of the cutout (10c) on a left and a right sides of the cut and raised piece (10) being non-interference regions (Ax12, Ax13), an interference region in which the part (P1) interferes with the tool when each tool length of each tool set in a processing program used to bend each bending line is virtually extended, based on each position of each tool in a left-right direction on which each tool is attached to a tool holder set in each tool station set in the processing program;
obtaining, by the control device (40), interference regions (Ax2, Ax3) on the left and right sides of the cut and raised piece (10);
arranging, by the control device (40), the bending region (Ax1) such that a center of the bending region (Ax1) coincides with a center of the tools for bending the bending region (Ax1);
arranging, by the control device (40), the non-interference regions (Ax12, Ax13) on the left and right sides of the bending region (Ax1);
setting , by the control device (40), the interference regions (Ax2, Ax3) on the left and right sides of the non-interference regions (Ax12, Ax13);
calculating, by the control device (40) a range from a coordinate value at the left end portion to a coordinate value at the right end portion of the interference region (Ax2) on the left side and a range from a coordinate value at the left end portion to a coordinate value at the right end portion of the interference region (Ax3) on the right side as a first coordinate range in which a tool is not allowed to be attached to the tool holder;
detecting, by the control device (40), a second coordinate range in which an additional tool is attached to the tool holder, the additional tool being manually added by an operator other than a tool being previously set in the processing program used to bend each bending line or installed by an automatic tool changer, and the second coordinate range being a range from a coordinate value at a left end portion to a coordinate value at a right end portion of the additional tool in the left-right direction of the tool holder; and
detecting, by the control device (40), whether or not the first coordinate range interferes with the second coordinate range, and determining that the additional tool is an improperly installed tool when it is detected that the first coordinate range interferes with the second coordinate range.

5. The tool improper installation detection method of the press brake (100) according to claim 4, further comprising displaying, on a display unit (161), that an error has occurred when the control device (40) determines that the additional tool is an improperly installed tool.

6. The tool improper installation detection method of the press brake (100) according to claim 4 or 5, further comprising stopping bending of the part (P1) when the control device (40) determines that the additional tool is an improperly installed tool.

## Patentansprüche

1. Vorrichtung für Erfassung fehlerhafter Installation eines Werkzeugs einer Presse (100), umfassend:
eine Einheit (401) für Berechnung eines Überlagerungsbereiches, die so konfiguriert ist, dass sie, wenn eine Vielzahl für ein Teil (P1) eingestellter Biegelinien unter Verwendung vorgegebener Werkzeuge nacheinander gebogen werden, ein Ausschnitt (10c) in dem Teil (P1) ausgebildet ist und ein von dem Ausschnitt (10c) umgebener Abschnitt ein eingeschnittenes und aufgerichtetes Teil (10) ist, eine Breite des eingeschnittenen und aufgerichteten Teils (10) ein Biegebereich (Ax1) ist, und Breitenabschnitte des Ausschnitts (10c) auf einer linken und einer rechten Seite des eingeschnittenen und aufgerichteten Teils (10) Nicht-Überlagerungsbereiche (Ax12, Ax13) sind, einen Überlagerungsbereich, in dem sich das Teil (P1) mit dem Werkzeug überlagert, wenn jede Werkzeuglänge jedes Werkzeuges, die in einem zum Biegen jeder Biegelinie verwendeten Verarbeitungsprogramm eingestellt wird, virtuell verlängert wird, basierend auf jeder Position jedes Werkzeugs in einer Links-Rechts-Richtung ermittelt, an der jedes Werkzeug an einem Werkzeughalter angebracht ist, der in jeder in dem Verarbeitungsprogramm eingestellten Werkzeugstation, eingestellt wird, wodurch Überlagerungsbereiche (Ax2, Ax3) an der linken und der rechten Seite des eingeschnittenen und aufgerichteten Teils (10) ermittelt werden;
eine Einheit (402) für Berechnung eines Koordinatenbereiches, die so konfiguriert ist, dass sie den Biegebereich (Ax1) so anordnet, dass eine Mitte des Biegebereiches (Ax1) mit einer Mitte der Werkzeuge zum Biegen des Biegebereiches (Ax1) zusammenfällt, die Nicht-Überlagerungsbereiche (Ax12, Ax13) auf der linken und der rechten Seite des Biegebereiches (Ax1) anordnet, die Überlagerungsbereiche (Ax2, Ax3) auf den linken und den rechten Seiten der Nicht-Überlagerungsbereiche (Ax12, Ax13) festlegt und einen Bereich von einem Koordinatenwert an dem linken Endabschnitt bis zu einem Koordinatenwert an dem rechten Endabschnitt des Überlagerungsbereiches (Ax2) auf der linken Seite sowie einen Bereich von einem Koordinatenwert an dem linken Endabschnitt bis zu einem Koordinatenwert an dem rechten Endabschnitt des Überlagerungsbereiches (Ax3) auf der rechten Seite als einen ersten Koordinatenbereich berechnet, in dem ein Werkzeug nicht an dem Werkzeughalter angebracht werden darf;
eine Einheit (50) für Erfassung einer Werkzeug-Installationsposition, die so konfiguriert ist, dass sie einen zweiten Koordinatenbereich erfasst, in dem ein zusätzliches Werkzeug an dem Werkzeughalter angebracht wird, wobei das zusätzliche Werkzeug manuell von einer Bedienungsperson hinzugefügt wird und sich von einem zuvor in dem Verarbeitungsprogramm eingestellten Werkzeug unterscheidet, das zum Biegen jeder Biegelinie verwendet wird, oder es von einem automatischen Werkzeugwechsler installiert wird, und der zweite Koordinatenbereich ein Bereich von einem Koordinatenwert an einem linken Endabschnitt bis zu einem Koordinatenwert an einem rechten Endabschnitt des zusätzlichen Werkzeugs in der Links-Rechts-Richtung des Werkzeughalters ist; sowie
eine Einheit (403) für Erfassung von Überlappung, die so konfiguriert ist, dass sie erfasst, ob sich der erste Koordinatenbereich mit dem zweiten Koordinatenbereich überlagert, und feststellt, dass das zusätzliche Werkzeug ein fehlerhaft installiertes Werkzeug ist, wenn erfasst wird, dass sich der erste Koordinatenbereich mit dem zweiten Koordinatenbereich überlagert.

2. Vorrichtung für Erfassung fehlerhafter Installation eines Werkzeugs einer Presse (100) nach Anspruch 1, die des Weiteren eine Anzeige-Steuerungseinheit (404) umfasst, die so konfiguriert ist, dass sie eine Anzeigeeinheit (161) so steuert, dass sie anzeigt, dass ein Fehler aufgetreten ist, wenn die Einheit (403) für Erfassung von Überlappung feststellt, dass das zusätzliche Werkzeug ein fehlerhaft installiertes Werkzeug ist.

3. Vorrichtung für Erfassung fehlerhafter Installation eines Werkzeugs einer Presse (100) nach Anspruch 1 oder 2, wobei die Einheit (403) für Erfassung von Überlappung eine Biege-Ausführungseinheit (405) so steuert, dass Biegen des Teils (P1) unterbrochen wird, wenn festgestellt wird, dass das zusätzliche Werkzeug ein fehlerhaft installiertes Werkzeug ist.

4. Verfahren zum Erfassen fehlerhafter Installation eines Werkzeugs einer Presse (100), umfassend:
wenn eine Vielzahl für ein Teil (P1) eingestellter Biegelinien unter Verwendung vorgegebener Werkzeuge nacheinander gebogen werden, ein Ausschnitt (10c) in dem Teil (P1) ausgebildet ist und ein von dem Ausschnitt (10c) umgebener Abschnitt ein eingeschnittenes und aufgerichtetes Teil (10) ist, eine Breite des eingeschnittenen und aufgerichteten Teils (10) ein Biegebereich (Ax1) ist, und Breitenabschnitte des Ausschnitts (10c) auf einer linken und einer rechten Seite des eingeschnittenen und aufgerichteten Teils (10) Nicht-Überlagerungsbereiche (Ax12, Ax13) sind, Ermitteln eines Überlagerungsbereiches, in dem sich das Teil (P1) mit dem Werkzeug überlagert, wenn jede Werkzeuglänge jedes Werkzeuges, die in einem zum Biegen jeder Biegelinie verwendeten Verarbeitungsprogramm eingestellt wird, virtuell verlängert wird, durch eine Steuerungsvorrichtung (40) zum Steuern der Presse (100) auf Basis jeder Position jedes Werkzeugs in einer Links-Rechts-Richtung, an der jedes Werkzeug an einem Werkzeughalter angebracht ist, der in jeder in dem Verarbeitungsprogramm eingestellten Werkzeugstation eingestellt wird;
Ermitteln von Überlagerungsbereichen (Ax2, Ax3) an der linken und der rechten Seite des eingeschnittenen und aufgerichteten Teils (10) durch die Steuerungsvorrichtung (40); Anordnen des Biegebereiches (Ax1) so dass eine Mitte des Biegebereiches (Ax1) mit einer Mitte der Werkzeuge zum Biegen des Biegebereiches (Ax1) zusammenfällt, durch die Steuerungsvorrichtung (40);
Anordnen der Nicht-Überlagerungsbereiche (Ax12, Ax13) auf der linken und der rechten Seite des Biegebereiches (Ax1) durch die Steuerungsvorrichtung (40);
Festlegen der Überlagerungsbereiche (Ax2, Ax3) auf den linken und den rechten Seiten der Nicht-Überlagerungsbereiche (Ax12, Ax13) durch die Steuerungsvorrichtung (40);
Berechnen eines Bereiches von einem Koordinatenwert an dem linken Endabschnitt bis zu einem Koordinatenwert an dem rechten Endabschnitt des Überlagerungsbereiches (Ax2) auf der linken Seite sowie eines Bereiches von einem Koordinatenwert an dem linken Endabschnitt bis zu einem Koordinatenwert an dem rechten Endabschnitt des Überlagerungsbereiches (Ax3) auf der rechten Seite als einen ersten Koordinatenbereich, in dem ein Werkzeug nicht an dem Werkzeughalter angebracht werden darf, durch die Steuerungsvorrichtung (40);
Erfassen eines zweiten Koordinatenbereiches, in dem ein zusätzliches Werkzeug an dem Werkzeughalter angebracht wird, durch die Steuerungsvorrichtung (40), wobei das zusätzliche Werkzeug manuell von einer Bedienungsperson hinzugefügt wird und sich von einem zuvor in dem Verarbeitungsprogramm eingestellten Werkzeug unterscheidet, das zum Biegen jeder Biegelinie verwendet wird, oder es von einem automatischen Werkzeugwechsler installiert wird, und der zweite Koordinatenbereich ein Bereich von einem Koordinatenwert an einem linken Endabschnitt bis zu einem Koordinatenwert an einem rechten Endabschnitt des zusätzlichen Werkzeugs in der Links-Rechts-Richtung des Werkzeughalters ist; sowie
Erfassen, ob sich der erste Koordinatenbereich mit dem zweiten Koordinatenbereich überlagert, und Feststellen, dass das zusätzliche Werkzeug ein fehlerhaft installiertes Werkzeug ist, durch die Steuerungsvorrichtung (40), wenn erfasst wird, dass sich der erste Koordinatenbereich mit dem zweiten Koordinatenbereich überlagert.

5. Verfahren für Erfassung fehlerhafter Installation eines Werkzeugs der Presse (100) nach Anspruch 4, das des Weiteren umfasst, dass auf einer Anzeigeeinheit (161) angezeigt wird, dass ein Fehler aufgetreten ist, wenn die Steuerungsvorrichtung (40) feststellt, dass das zusätzliche Werkzeug ein fehlerhaft installiertes Werkzeug ist.

6. Verfahren für Erfassung fehlerhafter Installation eines Werkzeugs der Presse (100) nach Anspruch 4 oder 5, das des Weiteren umfasst, dass Biegen des Teils (P1) unterbrochen wird, wenn die Steuerungsvorrichtung (40) feststellt, dass das zusätzliche Werkzeug ein fehlerhaft installiertes Werkzeug ist.

## Revendications

1. Dispositif de détection d'installation incorrecte d'outil d'une presse plieuse (100), comprenant :
une unité de calcul de région d'interférence (401) configurée pour obtenir, lorsqu'une pluralité de lignes de pliage définies pour une partie (P1) sont pliées séquentiellement en utilisant des outils prédéterminés, une découpe (10c) qui est formée dans la partie (P1) et une portion entourée par la découpe (10c) qui est une pièce coupée et surélevée (10), une largeur de la pièce coupée et surélevée (10) étant une région de pliage (Ax1), et des portions de largeur de la découpe (10c) sur les côtés gauche et droit de la pièce coupée et surélevée (10) étant des régions de non-interférence (Ax12, Ax13), une région d'interférence dans laquelle la partie (P1) interfère avec l'outil lorsque chaque longueur d'outil de chaque outil définie dans un programme de traitement utilisé pour plier chaque ligne de pliage est virtuellement étendue, sur la base de chaque position de chaque outil dans une direction gauche-droite sur laquelle chaque outil est fixé à un porte-outil défini dans chaque poste d'outil défini dans le programme de traitement, obtenant ainsi des régions d'interférence (Ax2, Ax3) sur les côtés gauche et droit de la pièce coupée et surélevée (10) ;
une unité de calcul de plage de coordonnées (402) configurée pour agencer la région de pliage (Ax1) de sorte qu'un centre de la région de pliage (Ax1) coïncide avec un centre des outils pour plier la région de pliage (Ax1), pour agencer les régions de non-interférence (Ax12, Ax13) sur les côtés gauche et droit de la région de pliage (Ax1), pour définir les régions d'interférence (Ax2, Ax3) sur les côtés gauche et droit des régions de non-interférence (Ax12, Ax13), et pour calculer une plage allant d'une valeur de coordonnée au niveau de la portion d'extrémité gauche à une valeur de coordonnée au niveau de la portion d'extrémité droite de la région d'interférence (Ax2) sur le côté gauche et une plage allant d'une valeur de coordonnée au niveau de la portion d'extrémité gauche à une valeur de coordonnée au niveau de la portion d'extrémité droite de la région d'interférence (Ax3) sur le côté droit en tant que première plage de coordonnées dans laquelle un outil n'est pas autorisé à être fixé au porte-outil ;
une unité de détection de position d'installation d'outil (50) configurée pour détecter une seconde plage de coordonnées dans laquelle un outil supplémentaire est fixé au porte-outil, l'outil supplémentaire étant ajouté manuellement par un opérateur autre qu'un outil qui est préalablement défini dans le programme de traitement utilisé pour plier chaque ligne de pliage ou installé par un changeur d'outil automatique, et la seconde plage de coordonnées étant une plage allant d'une valeur de coordonnée au niveau d'une portion d'extrémité gauche à une valeur de coordonnée au niveau d'une portion d'extrémité droite de l'outil supplémentaire dans la direction gauche-droite du porte-outil ; et
une unité de détection de chevauchement (403) configurée pour détecter si la première plage de coordonnées interfère ou non avec la seconde plage de coordonnées, et pour déterminer que l'outil supplémentaire est un outil incorrectement installé lorsqu'il est détecté que la première plage de coordonnées interfère avec la seconde plage de coordonnées.

2. Dispositif de détection d'installation incorrecte d'outil d'une presse plieuse (100) selon la revendication 1, comprenant en outre une unité de commande d'affichage (404) configurée pour commander une unité d'affichage (161) pour afficher qu'une erreur s'est produite lorsque l'unité de détection de chevauchement (403) détermine que l'outil supplémentaire est un outil incorrectement installé.

3. Dispositif de détection d'installation incorrecte d'outil d'une presse plieuse (100) selon la revendication 1 ou 2, dans lequel l'unité de détection de chevauchement (403) commande une unité d'exécution de pliage (405) pour arrêter le pliage de la partie (P1) lorsque l'outil supplémentaire est déterminé comme étant un outil incorrectement installé.

4. Procédé de détection d'installation incorrecte d'outil d'une presse plieuse (100), comprenant :
obtenir, par un dispositif de commande (40) pour commander la presse plieuse (100), lorsqu'une pluralité de lignes de pliage définies pour une partie (P1) sont pliées séquentiellement en utilisant des outils prédéterminés, une découpe (10c) qui est formée dans la partie (P1) et une portion entourée par la découpe (10c) qui est une pièce coupée et surélevée (10), une largeur de la pièce coupée et surélevée (10) qui est une région de pliage (Ax1), et des portions de largeur de la découpe (10c) sur des côtés gauche et droit de la pièce coupée et surélevée (10) qui sont des régions de non-interférence (Ax12, Ax13), une région d'interférence dans laquelle la partie (P1) interfère avec l'outil lorsque chaque longueur d'outil de chaque outil est définie dans un programme de traitement utilisé pour plier chaque ligne de pliage est virtuellement étendue, sur la base de chaque position de chaque outil dans une direction gauche-droite sur laquelle chaque outil est fixé à un porte-outil défini dans chaque poste d'outil défini dans le programme de traitement ;
obtenir, par le dispositif de commande (40), des régions d'interférence (Ax2, Ax3) sur les côtés gauche et droit de la pièce coupée et surélevée (10) ;
agencer, par le dispositif de commande (40), la région de pliage (Ax1) de sorte qu'un centre de la région de pliage (Ax1) coïncide avec un centre des outils pour plier la région de pliage (Ax1) ;
agencer, par le dispositif de commande (40), les régions de non-interférence (Ax12, Ax13) sur les côtés gauche et droit de la région de pilage (Ax1) ;
définir, par le dispositif de commande (40), les régions d'interférence (Ax2, Ax3) sur les côtés gauche et droit des régions de non-interférence (Ax12, Ax13) ;
calculer, par le dispositif de commande (40), une plage allant d'une valeur de coordonnée au niveau de la portion d'extrémité gauche à une valeur de coordonnée au niveau de la portion d'extrémité droite de la région d'interférence (Ax2) sur le côté gauche et une plage allant d'une valeur de coordonnée au niveau de la portion d'extrémité gauche à une valeur de coordonnée au niveau de la portion d'extrémité droite de la région d'interférence (Ax3) sur le côté droit en tant que première plage de coordonnées dans laquelle un outil n'est pas autorisé à être fixé au porte-outil ;
détecter, par le dispositif de commande (40), une seconde plage de coordonnées dans laquelle un outil supplémentaire est fixé au porte-outil, l'outil supplémentaire étant ajouté manuellement par un opérateur autre qu'un outil qui est préalablement défini dans le programme de traitement utilisé pour plier chaque ligne de pliage ou installé par un changeur d'outil automatique, et la seconde plage de coordonnées étant une plage allant d'une valeur de coordonnée au niveau d'une portion d'extrémité gauche à une valeur de coordonnée au niveau d'une portion d'extrémité droite de l'outil supplémentaire dans la direction gauche-droite du porte-outil ; et
détecter, par le dispositif de commande (40), si la première plage de coordonnées interfère ou non avec la seconde plage de coordonnées, et déterminer que l'outil supplémentaire est un outil incorrectement installé lorsqu'il est détecté que la première plage de coordonnées interfère avec la seconde plage de coordonnées.

5. Procédé de détection d'installation incorrecte d'outil de la presse plieuse (100) selon la revendication 4, comprenant en outre l'affichage, sur une unité d'affichage (161), qu'une erreur s'est produite lorsque le dispositif de commande (40) détermine que l'outil supplémentaire est un outil incorrectement installé.

6. Procédé de détection d'installation incorrecte d'outil de la presse plieuse (100) selon la revendication 4 ou 5, comprenant en outre l'arrêt du pliage de la partie (P1) lorsque le dispositif de commande (40) détermine que l'outil supplémentaire est un outil incorrectement installé.
